# EUROPÄISCHE PATENTSCHRIFT

(11) **EP 1 485 227 B1**
(45) Veröffentlichungstag und Bekanntmachung des Hinweises auf die Patenterteilung: **19.06.2013**
(21) Anmeldenummer: 03743817.3
(22) Anmeldetag: 24.02.2003
(51) Int. Cl.: B23K 35/36

(54) **FLUSSMITTEL ZUM LÖTEN VON ALUMINIUM**
SOLDERING FLUX FOR SOLDERING ALUMINIUM
FONDANT POUR LE SOUDAGE D'ALUMINIUM

(30) Priorität: 08.03.2002 DE 10210133
(43) Veröffentlichungstag der Anmeldung: 15.12.2004
(73) Patentinhaber: Behr GmbH & Co. KG, 70469 Stuttgart (DE)
(72) Erfinder: ENGLERT, Peter, 74177 Bad Friedrichshall (DE); HEEB, Wolfgang, 73614 Schorndorf (DE); KNÖDLER, Wolfgang, 71332 Waiblingen (DE)
(74) Vertreter: Grauel, Andreas
(86) Internationale Anmeldenummer: PCT/EP2003/001849
(87) Internationale Veröffentlichungsnummer: WO 2003/076123

(56) Entgegenhaltungen:
- DE-A- 19 913 111
- US-A- 2 686 354
- US-A- 5 584 946
- PATENT ABSTRACTS OF JAPAN vol. 013, no. 020 (M-785), 18. Januar 1989 (1989-01-18) & JP 63 230297 A (KOBE STEEL LTD), 26. September 1988 (1988-09-26)
- PATENT ABSTRACTS OF JAPAN vol. 015, no. 381 (M-1162), 26. September 1991 (1991-09-26) & JP 03 155495 A (SUMITOMO LIGHT METAL IND LTD), 3. Juli 1991 (1991-07-03)
- PATENT ABSTRACTS OF JAPAN vol. 015, no. 378 (M-1161), 24. September 1991 (1991-09-24) & JP 03 151192 A (SUMITOMO LIGHT METAL IND LTD), 27. Juni 1991 (1991-06-27)
- PATENT ABSTRACTS OF JAPAN vol. 015, no. 310 (M-1144), 8. August 1991 (1991-08-08) & JP 03 114663 A (FURUKAWA ALUM CO LTD), 15. Mai 1991 (1991-05-15)
- PATENT ABSTRACTS OF JAPAN vol. 011, no. 039 (M-559), 5. Februar 1987 (1987-02-05) & JP 61 206593 A (MITSUBISHI ALUM CO LTD), 12. September 1986 (1986-09-12)

## Beschreibung

Die Erfindung betrifft ein Flussmittel zum Löten von Aluminium gemäß dem Oberbegriff des Anspruches 1.

Es ist bekannt zwei metallische Werkstücke, insbesondere Aluminium-Wärmetauscher, miteinander unter Verwendung von Kaliumfluoroaluminaten (K₁₋₃AlF₄₋₆), wie es insbesondere unter der Marke NOCOLOK Flux® vertrieben wird, zu verbinden, wobei die Kaliumfluoroaluminate gleichzeitig, sowohl als Flussmittel als auch als Lot dient. Dabei hat das Kaliumfluoroaiuminat insbesondere folgende gewichtsprozentmäßige Zusammensetzung: K 28-31%, Al 16-18%, F 49-53%, Fe max. 0,03%, Ca max. 02,%, H₂O (550°C) max. 2,5%. Zur Herstellung einer Lötverbindung werden nach einer Reinigung Kaliumfluoroaluminate mittels Sprayfluxen (Fluten, Sprühen oder Tauchen) als wässrige Suspension auf einzelne Teile oder zusammengebaute Baueinheiten aufgetragen, überschüssiges Flussmittel wird in einem Abblaseschritt entfernt und anschließend getrocknet, um erhöhte Feuchtigkeitswerte im Ofen zu verhindern. Alternativ ist elektrostatisches Befluxen (oder Trocken-Befluxen) möglich, wobei Kaliumfluoroaluminate trocken aufgetragen werden. Nachfolgend werden die Werkstücke kontinuierlich und gleichmäßig auf Löttemperatur gebracht, die Kaliumfluoroaluminate schmelzen und lösen die Oxidschicht vom Aluminium, kurz bevor das Lot schmilzt und die Lötverbindung gebildet wird. Anschließend erfolgt die Abkühlung, wobei sich die Kaliumfluoroaluminate nach der Bildung des Lotes verfestigen. Das Löten erfolgt unter einer Stickstoff-Schutzgas-Atmosphäre.

Ferner sind eine Vielzahl von Schutzrechten oder Schutrrechtsanmeldungen betreffend die Oberflächenbehandlung von Aluminium bekannt. So beschreibt die US 5,795,659 eine Beharidlung der Aluminiumoberfläche mit Zirconium, Hafnium, Rhenium, Mangan, Titan, Silicaten und Boraten zum Korrosions- und Hochtemperaturkorrosionsschutz Die US 5,584,946 beschreibt ein Vorbehandlungs- und Oberflächenbehandlungsverfahren auf Basis komplexer Fluoride der Elemente Bor, Zirconium, Hafnium und Titan. Die US 5,962,145 beschreibt ein Oberflächenbehandlungsverfahren auf Basis komplexer Fluoride der Elemente Bor, Zirconium, Titan, Silizium, Germanium, Zinn in Verbindung mit Polymeren.

Ferner gibt es eine Vielzahl von Schutzrechten oder Schutzrechtsanmeldungen betreffend reaktive und funktionelle Flussmittel. So offenbart die WO00/73014 A1 die Aufbringung einer Aluminium-Silizium-Verbindung auf Bauteile aus Aluminium oder Aluminiumlegierungen durch das Aufbringen und Erhitzen von Alkalimetallhexafluorsilikat, bei der keine Lotplattierung erforderlich ist. Die Aluminium-Silizium-Lotbildung soll unter Zugabe von fluoridischen Flussmitteln bei der Erhitzung des Bauteiles entstehen. Aus der DE 199 13 111 A1 ist ein Flussmittel bekannt, welches im wesentlichen Alkalifluorzinkat oder Alkalifluorid/Zinkfluorid-Gemische aufwsist, wobei der Zinkanteil eine korrosionsschützende Oberfläche erzeugt. Die DE 100 154 86 A1 offenbart kalium- und cäsiumhaltige Flussmittel, nämlich Kalium- oder Cäsium-Fluorstannate, zur Lötung magnesiumhaltiger Aluminiumwerkstoffe. Aus der EP 0 659 519 B1 ist ein zinkhaltiges Flussmittel zur Verbesserung des Korrosionsschutzes offenbart

Derartige Lot-Flussmittel lassen noch Wünsche offen.

Ausgehend von diesem Stand der Technik ist es Aufgabe der Erfindung, ein verbessertes Flussmittel zur Verfügung zu stellen.

Diese Aufgabe wird gelöst durch ein Verfahren mit den Merkmalen des Anspruches 1. Vorteilhafte Ausgestaltungen sind Gegenstand der Unteransprüche.

Erfindungsgemäß wird einem Flussmittel auf der Basis von Kaliumfluoroaluminaten, insbesondere mit einer gewichtsprozentmäßige Zusammensetzung (vor dem Beifügen des Zusatzes) von K 28-31%, Al 16-18%, F 49-53%, Fe max. 0,03%, Ca max. 02,%, H₂0 (550°C) max. 2,5%, dem Flussmittel Zirkoniumfluorid und/oder Titanfluorid zugesetzt. Durch die Verwendung der Zusätze wird zum einen der Korrosionsschutz verbessert, wobei keine spezielle Vor- oder Nachbehandlung erforderlich ist. Vielmehr wird der Korrosionsschutz in einem Arbeitsgang mit dem Aufbringen des Flussmittels aufgetragen. Zum Anderen wird durch die Zugabe von Titanfluorid die Haftung eines ggf. nachfolgend aufgetragenen Lackes verbessert. Ebenfalls erfolgt eine Verringerung der Geruchsbildung sowie eine Optimierung des Wasserauslaufs.

Dabei beträgt vorzugsweise der Anteil des Zirkoniumfluorids und/oder des Titanfluorids nach dem Beifügen jeweils 0,1 bis 10 Gew.%, vorzugsweise 0,2 bis 5 Gew.-%, insbesondere 0,5 bis 3 Gew.-%, am Flussmittel, wobei ein optimaler Korrosionsschutz im Bereich zwischen 0,5 und 3 Gew.-% erzielt wird.

Vorzugsweise wird dem Flussmittel mindestens ein Metall aus der 4. oder 5. Nebengruppe des Periodensystems und/oder eine oxidische und/oder fluoridische Verbindung hiervon oder ein Gemisch hiervon zugesetzt, insbesondere trifft dies für Titan, Zirkonium, Hafnium und/oder Vanadium zu.

Vorzugsweise wird dem Flussmittel Bor, Mangan, Silizium, Rhenium und/oder eine oxidische und/oder fluoridische Verbindung hiervon zugesetzt. Dabei beträgt der Anteil des oder der weiteren Zusätze jeweils 0,1 bis 10 Gew.%, vorzugsweise 0,2 bis 5 Ges.-%, insbesondere 0,5 bis 3 Gew.-%, am Flussmittel.

Im folgenden wird die Erfindung anhand zweier Ausführungsbeispiele kurz erläutert.

Als Basis für das erfindungsgemäße Flussmittel dienen Kaliumfluoroaluminate (K₁₋₃AlF₄₋₆), wie sie insbesondere unter der Marke NOCOLOK Flux® vertrieben werden, dessen Zusammensetzung vorstehend beschrieben ist. Den Kaliumfluoroaluminaten werden Metallverbindungen, insbesondere Metallfluoride zugesetzt, wobei gemäß dem ersten Ausführungsbeispiel Zirkoniumfluorid zugesetzt wird. Hiervon werden ca. 0,1 bis 3 Gew.-% zugegeben. Dadurch wird das Flussmittel derart optimiert, dass nach dem Lötprozess eine funktionelle Oberfläche entstanden ist, die vor Korrosion schützt Ein weiterer Zusatz von Titanfluoriden in geringer Menge verbessert unter anderem die Haftung einer nachfolgenden Lackierung.

Gemäß einem zweiten Ausführungsbeispiel wird den Kaliumfluoroaluminaten Titanfluorid zugesetzt, insbesondere 0,5 bis 3 Gew.-%.

Weitere Zusätze, insbesondere wie in der Beschreibungseinleitung aufgeführt, sind in beiden Ausführungsbeispielen möglich.

Die Durchführung der Lötung erfolgt auf bekannte Weise, jedoch entfällt eine spezielle Vor- oder Nachbearbeitung zur Erzielung eines Korrosionsschutzes, da bereits das Flussmittel entsprechende schützende Eigenschaften aufweist.

## Patentansprüche

1. Flussmittel zum Löten von Aluminium auf der Basis von Kaliumfluoroaluminaten, **dadurch gekennzeichnet, dass** dem Flussmittel Zirkoniumfluorid und/oder Titanfluorid zugesetzt ist.

2. Flussmittel nach Anspruch 1, **dadurch gekennzeichnet, dass** der Anteil des Zirkoniumfluorids und/oder des Titanfluorids jeweils 0,1 bis 10 -Gew.-%, insbesondere 0,5 bis 3 Gew.%, am Flussmittel beträgt.

3. Flussmittel nach Anspruch 1 oder 2, **dadurch gekennzeichnet, dass** dem Flussmittel mindestens ein Metall aus der 4. oder 5. Nebengruppe des Periodensystems und/oder eine oxidische und/oder fluoridische Verbindung hiervon oder ein Gemisch hiervon zugesetzt ist.

4. Flussmittel nach Anspruch 3, **dadurch gekennzeichnet, dass** dem Flussmittel Titan, Zirkonium, Hafnium und/oder Vanadium und/oder eine oxidische und/oder fluoridische Verbindung hiervon zugesetzt ist.

5. Flussmittel nach einem der vorhergehenden Absprüche, **dadurch gekennzeichnet, dass** dem Flussmittel Bor und/oder eine oxidische und/oder fluoridische Verbindung hiervon zugesetzt ist.

6. Flussmittel nach einem der vorhergehenden Ansprüche, **dadurch gekennzeichnet, dass** dem Flussmittel Mangan und/oder eine oxidische und/oder fluoridische Verbindung hiervon zugesetzt ist.

7. Flussmittel nach einem der vorhergehenden Ansprüche, **dadurch gekennzeichnet, dass** dem Flussmittel Silizium und/oder eine oxidische und/oder fluoridische Verbindung hiervon zugesetzt ist.

8. Flussmittel nach einem der vorhergehenden Ansprüche, **dadurch gekennzeichnet, dass** dem Flussmittel Rhenium und/oder eine oxidische und/oder fluoridische Verbindung hiervon zugesetzt ist.

9. Flussmittel nach einem der vorhergehenden Ansprüche, **dadurch gekennzeichnet, dass** der Anteil des oder der weiteren Zusätze jeweils 0,1 bis 10 Gew.%, insbesondere 0,5 bis 3 Gew.%, am Flussmittel beträgt.

10. Verfahren zum Löten, insbesondere zum Löten von Aluminium, **gekennzeichnet durch** die Verwendung eines Flussmittels nach einem der vorstehenden Ansprüchen.

## Claims

1. A soldering flux based on potassium fluoroaluminates for soldering aluminum, **characterized in that** zirconium fluoride and/or titanium fluoride are added to the soldering flux.

2. The soldering flux as claimed in claim 1, **characterized in that** the zirconium fluoride and/or the titanium fluoride form 0,1 to 10% by weight, in particular 0,5 to 3% by weight, of the soldering flux, respectively.

3. The soldering flux as claimed in claim 1 or 2, **characterized in that** at least one metal from subgroup 4 or 5 of the periodic system and/or an oxidic and/or fluoridic compound thereof or a mixture thereof are added to the soldering flux.

4. The soldering flux as claimed in claim 3, **characterized in that** titanium, zirconium, hafnium and/or vanadium and/or an oxidic and/or fluoridic compound thereof are added to the soldering flux.

5. A soldering flux as claimed in any one of the preceding claims, **characterized in that** boron and/or an oxidic and/or fluoridic compound thereof are added to the soldering flux.

6. A soldering flux as claimed in any one of the preceding claims, **characterized in that** manganese and/or an oxidic and/or fluoridic compound thereof are added to the soldering flux.

7. A soldering flux as claimed in any one of the preceding claims, **characterized in that** silicon and/or an oxidic and/or fluoridic compound thereof are added to the soldering flux.

8. A soldering flux as claimed in any one of the preceding claims, **characterized in that** rhenium and/or an oxidic and/or fluoridic compound thereof are added to the soldering flux.

9. A soldering flux as claimed in any one of the preceding claims, **characterized in that** the one or more further additives forms 0,1 to 10% by weight, in particular 0,5 to 3% by weight, of the soldering flux.

10. A soldering process, in particular for soldering aluminum, **characterized by** the use of a soldering flux as claimed in any one of the preceding claims.

## Revendications

1. Fondant servant au brasage d'aluminium sur la base de fluoroaluminates de potassium, **caractérisé en ce que** du fluorure de zirconium et/ou du fluorure de titane est ajouté au fondant.

2. Fondant selon la revendication 1, **caractérisé en ce que** la proportion de fluorure de zirconium et/ou de fluorure de titane, dans le fondant, est comprise à chaque fois entre 0,1 % en poids et 10 % en poids, en particulier entre 0,5 % en poids et 3 % en poids.

3. Fondant selon la revendication 1 ou 2, **caractérisé en ce qu'**au moins un métal du 4^{e} ou du 5^{e} sous-groupe de la classification périodique des éléments et/ou un composé oxydique et/ou fluoridique de ce métal ou un mélange de ces éléments est ajouté au fondant.

4. Fondant selon la revendication 3, **caractérisé en ce que** du titane, du zirconium, de l'hafnium et/ou du vanadium et/ou un composé oxydique et/ou fluoridique de ces métaux est ajouté au fondant.

5. Fondant selon l'une quelconque des revendications précédentes, **caractérisé en ce que** du bore et/ou un composé oxydique et/ou fluoridique de ce métal est ajouté au fondant.

6. Fondant selon l'une quelconque des revendications précédentes, **caractérisé en ce que** du manganèse et/ou un composé oxydique et/ou fluoridique de ce métal est ajouté au fondant.

7. Fondant selon l'une quelconque des revendications précédentes, **caractérisé en ce que** du silicium et/ou un composé oxydique et/ou fluoridique de ce métal est ajouté au fondant.

8. Fondant selon l'une quelconque des revendications précédentes, **caractérisé en ce que** du rhénium et/ou un composé oxydique et/ou fluoridique de ce métal est ajouté au fondant.

9. Fondant selon l'une quelconque des revendications précédentes, **caractérisé en ce que** la proportion du ou des autres additifs, dans le fondant, est comprise à chaque fois entre 0,1 % et 10 % en poids, en particulier entre 0,5 % en poids et 3 % en poids.

10. Procédé de brasage, en particulier pour le brasage d'aluminium, **caractérisé par** l'utilisation d'un fondant selon l'une quelconque des revendications précédentes.
